# EUROPÄISCHE PATENTANMELDUNG

(11) **EP 1 426 609 A1**
(43) Veröffentlichungstag der Anmeldung: **09.06.2004**
(21) Anmeldenummer: 03405879.2
(22) Anmeldetag: 08.12.2003
(51) Int. Cl.: F02M 55/02, F16L 41/08

(54) **Druckspeicher für ein Common Rail System**

(30) Priorität: 06.12.2002 EP 02406067
(71) Anmelder: Wärtsilä Schweiz AG, 8401 Winterthur (CH)
(72) Erfinder: Hofer, Robert, 8353 Elgg (CH)
(74) Vertreter: Sulzer Management AG

(57) **Zusammenfassung**

Die Erfindung betrifft einen Druckspeicher für ein Common Rail System einer Brennkraftmaschine mit einem rohrförmigen Grundkörper (2) mit einer Wandung (3), die einen im Innern des Grundkörpers (2) vorgesehenen Speicherraum (4) für ein zu speicherndes Medium begrenzt, sowie mit mindestens einer Durchgangsbohrung (5) zum Abführen des Mediums. Die Durchgangsbohrung (5) erstreckt sich durch die Wandung (3) und mündet in einen Durchlass (6) eines Abzweigelements (7), wobei die Wandung (3) an ihrer äusseren Oberfläche zwei Aussparungen (8) zur Aufnahme des Abzweigelements (7) aufweist, und das Abzweigelement (7) so ausgestaltet und angeordnet ist, dass das Medium durch den Durchlass (6) abführbar ist.

## Beschreibung

Die Erfindung betrifft einen Druckspeicher für ein Common Rail System, sowie einen Grossdieselmotor mit einem Common Rail System mit einem solchen Druckspeicher gemäss dem Oberbegriff des unabhängigen Anspruchs der jeweiligen Kategorie.

Im Speziellen betrifft die Erfindung einen Druckspeicher, der für ein Common Rail System, insbesondere für ein Servoölsystem, in einem Grossdieselmotor geeignet ist. Grossdieselmotoren werden beispielsweise als Hauptantriebsaggregate für Schiffe oder als Stationäranlagen zur Stromerzeugung eingesetzt. Sie sind meistens als langsam laufende Zweitakt-Kreuzkopfmaschinen oder als Viertakt-Maschinen ausgebildet. Gemäss neuerer Entwicklungen werden in modernen Grossdieselmotoren die Brennstoffeinspritzung, Servoölsysteme beispielsweise für den Gaswechsel, die Wassereinspritzung und gegebenenfalls Hilfssysteme, z. B. für Steueröl, mit Common Rail Systemen betrieben. Dabei wird mittels Pumpen das jeweilige Fluid, z. B. der Brennstoff für die Einspritzung, ein Hydraulikmedium zur Betätigung der Auslassventile oder ein Arbeitsmedium zur Steuerung der Einspritzung, unter Hochdruck in einen Druckspeicher gefördert, der auch als Akkumulator bezeichnet wird. Mit dem unter Druck stehenden Fluid aus dem jeweiligen Akkumulator werden dann sämtliche Zylinder der Brennkraftmaschine versorgt bzw. die Ventile und die Brennstoffeinspritzvorrichtungen angesteuert.

Die Druckspeicher können jeweils als rohrähnliche, an beiden Enden geschlossene Bauteile ausgestaltet sein, die sich etwa auf Höhe der Zylinderköpfe entlang des Motors erstrecken. Die rohrförmigen Grundkörper der Druckspeicher weisen typischerweise mehrere Bohrungen auf, über welche der Speicherraum des Druckspeichers mit den jeweiligen Versorgungs- oder Betätigungseinrichtungen der einzelnen Zylinder verbindbar ist.

Die höchsten Drücke treten typischerweise im Common Rail System für die Brennstoffeinspritzung auf. Im zugehörigen Druckspeicher kann der Druck beispielsweise bis 2000 bar betragen. Im Betrieb sind es insbesondere die dynamischen, z. B. durch Druckschwankungen verursachten, Belastungen, die hohe mechanische Anforderungen an die Druckspeicher stellen. Die Hochdruckfestigkeit des Druckspeichers wird insbesondere auch durch die radialen Bohrungen begrenzt. Diese können die Spannungen, insbesondere die Vergleichsspannung, um einen Faktor, auch Kerbfaktor genannt, drei bis vier und mehr erhöhen. Bei grossen Rohren, beispielsweise mit Innendurchmessern von mehr als 50 mm und hohen Drücken von mehr als 100 bar müsste bei Verwendung handelsüblicher Werkstoffe, beispielsweise von St52, eine unverhältnismässig grosse Wandstärke vorgesehen werden, um zulässige Spannungen in der Rohrwand zu erhalten.

Zur Erhöhung der Hochdruckfestigkeit des Druckspeichers in einem Common Rail Einspritzsystem wird in der DE-A-199 49 962 vorgeschlagen, den als Speicherraum dienenden Innenraum des Grundkörpers im Bereich der Einmündung der Bohrungen eben auszubilden, um so die Spannungsspitzen im Verschneidungsbereich zwischen den Bohrungen und dem Grundkörper zu reduzieren. Diese ebenen Bereiche werden nachträglich durch eine lokale, Material abtragende Bearbeitung hergestellt.

Die Aufgabe der vorliegenden Erfindung ist es, einen Druckspeicher für ein Commmon Rail System einer Brennkraftmaschine vorzuschlagen, bei dem mit möglichst einfachen Massnahmen ein hoher Innendruck bei dynamischer Belastung ermöglicht wird, ohne dass dafür die äusseren Abmessungen bzw. die Wandstärke und somit der Platz- und Materialbedarf für den Druckspeicher vergrössert wird. Insbesondere soll der Druckspeicher für ein Common Rail System eines Grossdieselmotors geeignet sein und speziell für ein Servoölsystem.

Der diese Aufgabe lösende Druckspeicher ist durch die Merkmale des unabhängigen Anspruchs 1 gekennzeichnet.

Die jeweiligen abhängigen Ansprüche beziehen sich auf besonders vorteilhafte Ausführungsformen der Erfindung.

Die Erfindung betrifft somit einen Druckspeicher für ein Common Rail System einer Brennkraftmaschine mit einem rohrförmigen Grundkörper mit einer Wandung, die einen im Innern des Grundkörpers vorgesehenen Speicherraum für ein zu speicherndes Medium begrenzt, sowie mit mindestens einer Durchgangsbohrung zum Abführen des Mediums versehen ist. Die Durchgangsbohrung erstreckt sich durch die Wandung und mündet in einen Durchlass eines Abzweigelements, wobei die Wandung an ihrer äusseren Oberfläche zwei Ausparungen zur Aufnahme des Abzweigelements aufweist, und das Abzweigelement so ausgestaltet und angeordnet ist, dass das Medium durch den Durchlass abführbar ist.

Der erfindungsgemässe Druckspeicher weist in an sich bekannter Weise einen rohrförmigen Grundkörper mit einer Wandung auf, die einen Speicherraum für ein zu speicherndes Medium, insbesondere für ein unter hohem Druck stehendes Servoöl, begrenzt. Dabei weist die Wandung mindestens eine Durchgangsbohrung zum Abführen des Mediums auf, wobei die Durchgangsbohrung mit einem Durchlass eines Abzweigelements, das bevorzugt als Anschlussflansch ausgestaltet ist, derart zusammenwirkt, dass das Medium über die Durchgangsbohrung und den Durchlass des Abzweigelements aus dem Speicherraum des Druckspeichers entnommen werden kann, wobei die Durchgangsbohrung und / oder der Durchlass des Abzweigelements bevorzugt hohlzylinderförmig ausgestaltet sind und sich in Bezug auf eine Längsachse des Druckspeichers in radialer Richtung erstrecken. Es versteht sich, dass die Durchbohrung und / oder der Durchlass auch anders ausgebildet und auch anders an der Wandung des Druckspeichers angeordnet sein können als zuvor beschrieben.

Wesentlich für die Erfindung ist dabei, dass die Wandung des Grundkörpers an ihrer äusseren Oberfläche mindestens zwei Aussparungen zur Aufnahme des Abzweigelements aufweist. Dabei ist in einem bevorzugten Ausführungsbeispiel die Aussparung als Längsnut ausgestaltet, die sich entlang einer Längsachse über eine wesentliche Länge des Grundkörpers erstreckt, was insbesondere aus fertigungstechnischen Gründen günstig sein kann. Selbstverständlich kann die Aussparung auch nur im Bereich des Abzweigelements ausgebildet sein.

In einem für die Praxis wichtigen Ausführungsbeispiel weist das Abzweigelement zwei Auflageleisten auf, die so ausgestaltet und am Abzweigelement angeordnet sind, dass sie mit den Ausparungen an der Wandung des Grundkörpers so zusammenwirken, dass das Abzweigelement im Einbauzustand auf den rohrförmigen Grundkörper des Druckspeichers eine Vorspannung erzeugt. Dadurch sind die Spannungen im Grundkörper bzw. in der Wandung des Grundkörpers, die durch die hohe Druckdifferenz zwischen dem Speicherraum im Inneren des Grundkörpers und der äusseren Umgebung im Betriebszustand auftreten, deutlich reduzierbar. Es hat sich nämlich gezeigt, dass die durch das Abzweigelement im Grundkörper bzw. in der Wandung des Grundkörpers erzeugte Vorspannung die durch die Durchgangsbohrung verursachten Spannungsüberhöhungen, die insbesondere in der Wandung in unmittelbarer Nähe der Durchgangsbohrung auftreten, im Betriebszustand im wesentlichen kompensierbar sind. Dadurch lässt sich bei gegebener Dauerfestigkeit des Werkstoffs, aus dem der Grundkörper hergestellt ist, der zulässige Innendruck, auch für dynamische Belastungen, deutlich erhöhen und / oder die äussere Abmessung des Druckspeichers, insbesondere sein Durchmesser, reduzieren, weil beispielsweise die Wandung dünner ausgestaltet werden kann.

Zur Fixierung des Abzweigelements sind Befestigungsmittel, insbesondere eine Verschraubung, vorgesehen, womit das Abzweigelement unter einer vorgebbaren Vorspannung in der Wandung des Grundkörpers verankerbar ist. Dabei ist die vorgebbare Vorspannung über die in den Ausnehmungen angeordneten Auflageleisten und / oder über die Verschraubung auf die Wandung des Grundkörpers vermittelbar. Dabei kann zwischen Grundkörper und Abzweigelement zur Beabstandung des Abzweigelements von der Wandung des Grundkörpers insbesondere ein Spalt vorgesehen sein, wodurch die Vorspannung im Grundkörper gleichmässig einstellbar ist, so dass der Druckspeicher insgesamt flexibel auch auf dynamische Druckänderungen im Speicherraum des Grundkörpers reagieren kann.

Zur Abdichtung kann im speziellen zwischen dem Durchlass des Abzweigelements und der Durchgangsbohrung der Wandung ein Dichtelement angeordnet sein. Dabei ist das Dichtelement bevorzugt, aber nicht notwendigerweise, als elastischer metallischer Dichtring, beispielsweise als Hohllinsendichtung ausgebildet. Dabei ist ein elastischer metallischer Dichtring vorteilhaft als wieder verwendbarer Dichtring ausgeführt.

In einem für die Praxis wichtigen Ausführungsbeispiel eines erfindungsgemässen Druckspeichers ist an einer äusseren Fläche der Wandung des Grundkörpers eine Abflachung vorgesehen, die zumindest im Bereich der Durchgangsbohrung eben ausgestaltet ist. Dabei kann die Abflachung auch über eine wesentliche Länge des Grundkörpers ausgebildet sein, was wiederum aus herstellungstechnischen Gründen besonders vorteilhaft sein kann.

Darüber hinaus betrifft die Erfindung einen Grossdieselmotor mit einem Common Rail System, das einen Druckspeicher umfasst, wie er zuvor beispielhaft an einigen Ausführungsbeispielen erläutert wurde.

Die Erfindung wird an Hand der schematischen Zeichnung im folgenden näher erläutert. Es zeigen:

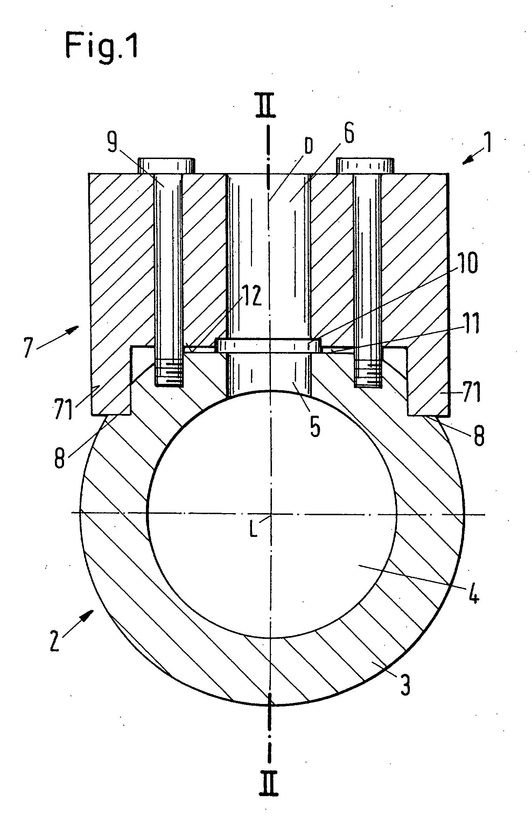

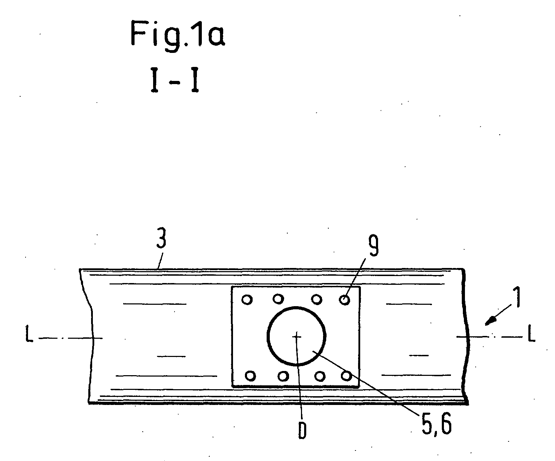

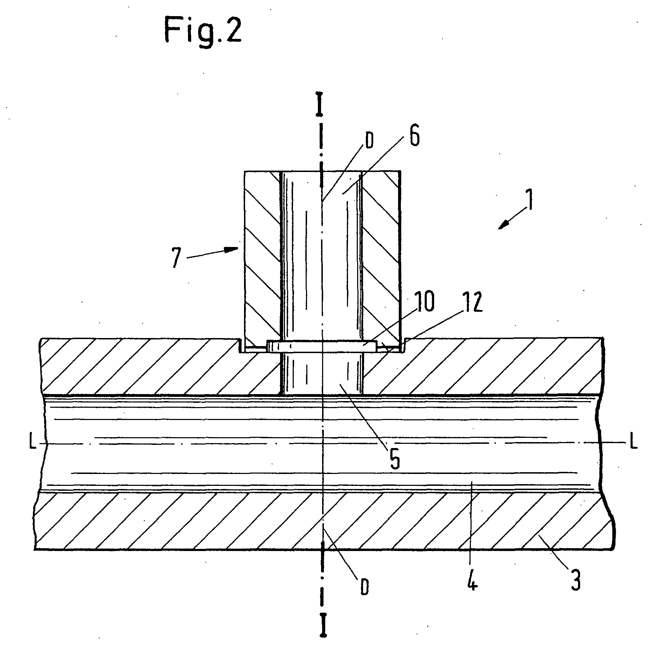

- Fig. 1: einen Querschnitt durch ein Ausführungsbeispiel eines erfindungsgemässen Druckspeichers entlang der Schnittlinie I-I in Fig. 2;
- Fig. 1 a: eine Ansicht des Druckspeichers aus Fig. 1, senkrecht zur Schnittlinie II-I;
- Fig. 2: einen Längsschnitt durch das Ausführungsbeispiel aus Fig. 1 entlang der Schnittlinie II-II in Fig. 1.

Fig. 1 zeigt in einer schematischen Darstellung einen Querschnitt durch ein Ausführungsbeispiel eines erfindungsgemässen Druckspeichers, der im folgenden gesamthaft mit dem Bezugszeichen 1 bezeichnet wird. Der Schnitt liegt entlang der Schnittlinie I-I gemäss Fig. 2, die das gleiche Ausführungsbeispiel in einem Längsschnitt entlang der Linie II-II in Fig. 1 zeigt.

Das in den Fig. 1, Fig. 1 a bzw. in Fig. 2 dargestellte Ausführungsbeispiel eines erfindungsgemässen Druckspeichers 1 weist einen im wesentlichen röhrförmigen Grundkörper 2 mit einer Wandung 3 auf, die einen Speicherraum 4 für ein zu speicherndes Medium, insbesondere für ein unter hohem Druck von beispielsweise 2000 bar, bzw. unter einem Druck von weniger als 1000 bar, im speziellen weniger als 500 bar, oder weniger als 200 bar stehenden Fluid, begrenzt. Die Wandung 3 weist eine Durchgangsbohrung 5 zum Abführen des Mediums auf, wobei die Durchgangsbohrung 5 mit einem Durchlass 6 eines als Anschlussflansch 7 ausgestalteten Abzweigelements 7 derart zusammenwirkt, dass das Medium über die Durchgangsbohrung 5 und den Durchlass 6 aus dem Speicherraum 4 entnommen werden kann.

Zwischen der Durchgangsbohrung 5 und dem Durchlass 6 ist zur Abdichtung ein elastischer Dichtring 10 angeordnet.

Bevorzugt ist die Durchbohrung 5, sowie der Durchlass 6 hohlzylinderförmig ausgebildet und mit einer Mittelachse D radial nach aussen gerichtet, dass heisst, die Mittelachse D der Durchbohrung 5 steht im wesentlichen senkrecht auf einer Längsachse L des Grundkörpers 2 und bildet mit der Längsachse L eine bezüglich dem Querschnitt des Grundkörpers 2 symmetrische Schnittebene. Es versteht sich, dass die Durchbohrung 5 und / oder der Durchlass 6 auch anders ausgebildet und angeordnet sein können, insbesondere muss die Durchbohrung 5 und / oder der Durchlass 6 nicht hohlzylinderförmig ausgebildet sein. Auch kann beispielsweise die Mittelachse D einen von 90° verschiedenen Winkel mit der Längsachse L bilden und /oder die Durchbohrung 5 und / oder der Durchlass 6 können so bezüglich der Wandung 3 angeordnet sein, dass die Mittelachse D und die Längsachse L keine gemeinsame Schnittebene bilden.

Als wesentliches Merkmal weist die Wandung 3 des Grundkörpers 2 an ihrer äusseren Oberfläche zwei, bezüglich der Durchgangsbohrung 5, diametral angeordnete Aussparungen 8 auf, die sich als Längsnut 8 entlang der Längsachse L des Grundkörpers 2 erstrecken.

Das Abzweigelement 7 weist zwei Auflageleisten 71 auf, die mit der Längsnut 8 der Wandung des Grundkörpers kraftschlüssig und / oder formschlüssig zusammenwirken, so dass auf den rohrförmigen Grundkörper 2 des Druckspeichers 1 eine Vorspannung erzeugbar ist. Zur Fixierung des Abzweigelements 7 am Grundkörper 2, sowie zur Erzeugung der Druckvorspannung sind Befestigungsmittel 9 in Form von Verschraubungen 9 vorgesehen. Dabei können in der Praxis, wie in Fig. 1 a schematisch dargestellt, mehrere Verschraubungen 9 vorgesehen sein, die bevorzugt in Richtung der Längsachse L entlang zweier paralleler Verschraubungsstrecken, diametral zum Durchlass 6 angeordnet sind, wodurch die Vorspannungen in der Wandung 3 im Bereich der Durchbohrung 5 gemäss einem vorgebbaren Schema optimal einstellbar sind.

In dem in Fig. 1 dargestellten, für die Praxis wichtigen Ausführungsbeispiel, ist an einer äusseren Fläche zwischen Abzweigelement 7 und Grundkörper 2 eine Abflachung 12 vorgesehen, so dass zwischen Grundkörper 2 und Abzweigelement 7 ein Spalt 11 entsteht, wodurch die Vorspannung im Grundkörper 2 nach einem vorgebbaren Schema verteilbar ist, so dass der Druckspeicher 1 insgesamt auch auf dynamische Druckänderungen im Speicherraum 4 des Grundkörpers 2 reagieren kann.

Fig. 2 zeigt einen Längsschnitt durch das Ausführungsbeispiel aus Fig. 1 entlang der Schnittlinie II-II in Fig. 1. Die Abflachung 12 ist in dem hier gezeigten Ausführungsbeispiel nur im Bereich des Abzweigelements 7 vorgesehen. Selbstverständlich ist es auch möglich, dass sich die Abflachung 12 im wesentlichen über die gesamte Länge des Grundkörpers 2 erstreckt.

Es versteht sich, dass in der Praxis der Druckspeicher 1 mehrere Durchbohrungen 5 mit entsprechenden Abzweigelementen 7 aufweisen kann, die an vorgebbaren Stellen über den Umfang des Grundkörpers 2 verteilt angeordnet sein können, so dass das Druckmedium ohne grossen Aufwand in verschiedene Richtungen aus dem Speicherraum 4 abführbar ist.

Durch die vorliegende Erfindung können Spannungen im Grundkörper eines Druckspeichers eines Common Rail Systems, die durch die hohe Druckdifferenz bzw. durch dynamische Druckschwankungen im System auftreten, auf einfache Weise deutlich reduziert werden. Insbesondere im Bereich von Durchgangsbohrungen, durch die ein unter hohem Druck stehendes Medium entnommen werden kann, werden Spannungsüberhöhungen in der Wandung des Druckspeichers deutlich gesenkt. Dadurch lässt sich bei gegebener Dauerfestigkeit des Werkstoffs, aus dem der Grundkörper des Druckspeichers aufgebaut ist, der zulässige Innendruck, und die Bandbreite dynamischer Druckschwankungen deutlich erhöhen und / oder die äusseren Abmessungen des Druckspeichers, insbesondere sein Durchmesser, reduzieren, weil beispielsweise die Wandung des Grundkörpers dünner ausgestaltet werden kann. Damit ergibt sich im Einbauzustand nicht nur ein merklicher Platzgewinn, sowie eine erhebliche Gewichtsersparnis von bis zu einigen 100 kg, sondern der Druckspeicher kann auch deutlich kostengünstiger hergestellt werden.

## Patentansprüche

1. Druckspeicher für ein Common Rail System einer Brennkraftmaschine mit einem rohrförmigen Grundkörper (2) mit einer Wandung (3), die einen im Innern des Grundkörpers (2) vorgesehenen Speicherraum (4) für ein zu speicherndes Medium begrenzt, sowie mit mindestens einer Durchgangsbohrung (5) zum Abführen des Mediums, die sich durch die Wandung (3) erstreckt und in einen Durchlass (6) eines Abzweigelements (7) mündet, **dadurch gekennzeichnet, dass** die Wandung (3) an ihrer äusseren Oberfläche zwei Aussparungen (8) zur Aufnahme des Abzweigelements (7) aufweist, wobei das Abzweigelement (7) so ausgestaltet und angeordnet ist, dass das Medium durch den Durchlass (6) abführbar ist.

2. Druckspeicher nach Anspruch 1, wobei Befestigungsmittel (9) zur Fixierung des Abzweigelements (7) in der Wandung (3) des Grundkörpers (2) vorgesehen sind.

3. Druckspeicher nach Anspruch 1 oder 2, wobei zwischen dem Durchlass (6) des Abzweigelements (7) und der Durchgangsbohrung (5) der Wandung (3) ein Dichtelement (10) zur Abdichtung angeordnet ist.

4. Druckspeicher nach einem der vorangehenden Ansprüche, wobei das Dichtelement (10) als elastischer Dichtring (10) ausgebildet ist.

5. Druckspeicher nach einem der vorangehenden Ansprüche, wobei zur Beabstandung des Abzweigelements (7) von der Wandung (3) des Grundkörpers (2) zwischen dem Abzweigelement (7) und der Wandung (3) des Grundkörpers (2) ein Spalt (11) vorgesehen ist.

6. Druckspeicher nach einem der vorangehenden Ansprüche, wobei an einer äusseren Fläche der Wandung (3) des Grundkörpers (2) eine Abflachung (12) vorgesehen ist, die zumindest im Bereich der Durchgangsbohrung (5) eben ausgestaltet ist.

7. Druckspeicher nach einem der vorangehenden Ansprüche, bei welchem die Abflachung (12) über eine wesentliche Länge des Grundkörpers (2) ausgebildet ist.

8. Druckspeicher nach einem der vorangehenden Ansprüche, bei welchem sich die Durchgangsbohrung (5) und / oder der Durchlass (6) in radialer Richtung erstreckt.

9. Druckspeicher nach einem der vorangehenden Ansprüche, bei welchem jede Aussparung (8) als Längsnut (8) ausgestaltet ist, die sich entlang einer Längsachse (L) des Grundkörpers (2) erstreckt.

10. Grossdieselmotor mit einem Common Rail System, das einen Druckspeicher (1), insbesondere für ein Servoöl, gemäss einem der vorangehenden Ansprüche umfasst.
